# EUROPEAN PATENT SPECIFICATION

(11) **EP 1 316 187 B1**
(45) Date of publication and mention of the grant of the patent: **04.05.2005**
(21) Application number: 01960961.9
(22) Date of filing: 28.08.2001
(51) Int. Cl.: H04L 29/06, G06F 1/00

(54) **METHOD AND SYSTEM FOR TESTING A CONTENTS SERVER**
VERFAHREN UND VORRICHTUNG ZUR PRÜFUNG EINES INHALTSERVERS
TELECOMMUNICATIONS PAR RESEAUX ENTRE SYSTEMES INFORMATIQUES

(30) Priority: 04.09.2000 JP 2000267670
(43) Date of publication of application: 04.06.2003
(73) Proprietor: International Business Machines Corporation, Armonk, NY 10504 (US)
(72) Inventor: WANG, Xiaozhou, Yamato, Kanagawa (JP); HIROTA, Mikito, Yokohamashi, Kanagawa (JP); YABUTA, Kazuhiro, Yamato, Kanagawa (JP)
(74) Representative: Waldner, Philip
(86) International application number: PCT/GB2001/003832
(87) International publication number: WO 2002/021788

(56) References cited:
- WO-A-00/48110
- WO-A-99/63416
- WO-A-99/64967
- BARRETT R ET AL: "Intermediaries: new places for producing and manipulating Web content" 1998 , COMPUTER NETWORKS AND ISDN SYSTEMS, NORTH HOLLAND PUBLISHING. AMSTERDAM, NL, VOL. 30, NR. 1-7, PAGE(S) 509-518 XP004121397 ISSN: 0169-7552 the whole document
- PATENT ABSTRACTS OF JAPAN vol. 2000, no. 04, 31 August 2000 (2000-08-31) & JP 2000 003334 A (FUJITSU LTD), 7 January 2000 (2000-01-07) & US 2001/000358 A1 (KOUSEI, HISAYUKI, MAKINO) 19 April 2001 (2001-04-19)
- PATENT ABSTRACTS OF JAPAN vol. 1997, no. 07, 31 July 1997 (1997-07-31) & JP 09 073425 A (MITSUBISHI ELECTRIC CORP), 18 March 1997 (1997-03-18)

## Description

### Field of the Invention

The present invention is related to a computer network system, a computer system, a method for communication between computer systems, and a method for measuring computer system performance. In particular, it is effectively applied to a technique for enabling the access from a conventional personal computer to a website which serves a request sent from a mobile phone terminal or the like along with a terminal ID.

### Background Art

The diversification of network technology has enabled the access from a mobile phone terminal, for instance, i-mode cellphone, to the Internet. For instance, for the i-mode mobile terminal, after connected to a packet communication network which is run by a carrier (an enterprise such as NTT), it can be connected to the Internet through a gateway (for the i-mode, called an i-mode center).

In the gateway, a protocol used in the Internet is converted to a protocol used in the packet communication network. For instance, for the i-mode center, TCP/IP (Transmission Control Protocol/Internet Protocol) and PDC (Personal Digital Cellular) protocol/TLP (Transport Protocol) are converted to each other, and HTTP (Hypertext Transfer Protocol) and ALP (Application Layer Protocol) are converted to each other.

By the existence of such gateway, a website responding to a request from a mobile phone terminal can be constructed on the Internet, and various services can be provided to the mobile phone terminal from the website.

In the browser installed in a mobile phone terminal, for instance, an i-mode terminal, compact HTML, a subset of HTML (Hypertext Markup Language), is used. thus, if a website compatible with compact HTML is constructed and connected to the Internet, a server for the i-mode mobile phone terminal can be constructed.

The browser for the mobile phone terminal has no cookie, differently from ordinary browsers such as Internet Explorer (trademark) and Netscape Navigator (trademark), which are running on conventional personal computers. For this, as information for identifying a client, a terminal ID given by the above gateway is utilized. The terminal ID is used not only as billing information, but also to identify a user at the server side. For instance, by the terminal ID attached to a request, the user can be identified, and the improvement of the service level such as optimization of response according to the user can be enabled using the approach used in the ordinary cookie. In a site registered by a carrier (generally called an official site), a system is often constructed based on the premise that such terminal ID is sent.

### Problems to be Solved by the Invention

As described above, in a contents server for mobile phone terminals, a system is often constructed based on the existence of terminal ID. This causes the following problems.

That is, there is a problem that a general-purpose Web performance tool cannot be used to measure the performance of a contents server. The general-purpose Web performance tool runs on a conventional personal computer, so access should be made from the personal computer to the server for mobile terminals. However, the access from the personal computer is not made to the server through the gateway of the carrier, but through the Internet. Thus, no terminal ID is given to a request from the client, and the server for mobile terminals does not accept the access because of the absence of terminal ID. Accordingly, the Web performance of the server cannot be verified using a general-purpose tool.

For example document D1:= WO 99 64967 discloses a system where the cookies for the communication with a remote server and a terminal IDs are stored in a proxy server in order to save memory of the mobile terminal. However, those cookies are received from the remote server and used for the purposes such as improving the efficiency of the communication e.g. between proxy and remote server.

The problem with the prior art mentioned above is that an user has not any possibility to create cookies in order to perform some specific actions e.g. testing or measuring of the network performances.

The method for measuring performance includes the one in which many mobile phone terminals are used to actually access a server for mobile terminals. However, this method limits the number of mobile terminals which can simultaneously make an access, it is impossible to perform a practical bulk stress test (a test to verify whether a predetermined response can be made in the server system if simultaneous accesses are received).

Specifically, if the system performance is desired to be measured during the development of a server for mobile phone terminals, even the access through the gateway of the carrier cannot be carried out, because the connection to the carrier is not established yet, so a bulk stress test is substantially impossible during the development. This resultantly inhibits automation for consistently performing the construction, verification, and test of the system for mobile terminals.

Further, for reason similar to the above, no access can be made to the server for mobile terminals from a personal computer having no terminal ID. It is still true that no access can be made from equipment having no terminal ID not only in the measurement of the system performance, but also when the normal service is provided. Thus, the contents service constructed for mobile terminals cannot be received through a conventional personal computer.

On the other hand, on the server providing contents service, there is the inconvenience that it is needed to separately construct the contents for mobile terminals and the contents for ordinary personal computers, and these contents cannot be shared.

If access can be permitted from both mobile phone terminals and personal computers, it is possible to construct a service site very convenient for users, which has both characteristics of the real time and mobility of the mobile terminal and the usability of the personal computer. The diversification of the Internet has resulted in such the Internet.

It is an object of the present invention to provide a technique for connection to a service site for mobile phone terminals from a conventional personal computer having no terminal ID.

Further, it is an object of the present invention to provide a technique for enabling an effective bulk stress test for a service site for mobile phone terminals to be performed using a general-purpose Web performance tool.

Further, it is an object of the present invention to provide a technique for enabling the easy construction of service sites for mobile phone terminals and ordinary personal computers.

### Summary of the Invention

The invention of this application is outlined as follows. That is, in the system or method of the present invention, a proxy server (second computer system) is set for a personal computer (third computer system) making an access to a service site for mobile phone terminals (first computer system). And, a request is issued to a service site through the proxy server. In this specification, a personal computer system is shown as the third computer system by way of example, but this is no restriction. All the information processing apparatuses having no terminal ID provided by a carrier and capable of accessing a website are included. Further, a proxy server is shown as the second computer system by way of example, but this is no restriction. All the information processing terminals are included as long as they have a function allowing the management of the correspondence between terminal ID and session control identifier to be described below.

The proxy server generates a terminal identifier (third terminal identifier) suitable for the format of the terminal ID assumed by a service site for mobile phone terminals, generates the cookie (session control identifier) of the client personal computer, and relates the terminal identifier and the cookie to store them. In the proxy server, to a request from the personal computer, the terminal ID related to its cookie is appended, and the request is transferred to the service site along with the terminal ID. As the terminal ID, the phone number of a mobile phone or an identifier unique to the phone number, which is provided in the gateway of a carrier, can be given by way of example. Further, a cookie is given here as session control identifier by way of example, but this is no restriction. As long as it has a function in which a specific memory area can be provided for a personal computer or each job controlling the session of a personal computer to store session control information, it can apply to the session control identifier of this application.

This preferred embodiment of the invention is defined by the subject-matter of the independent system claims 1 and 4, apparatus claim 11, as well as by the steps of the independent method claims 9 and 10.

Since the proxy server appends a terminal ID to the request from a personal computer, the service site can execute a predetermined service using the terminal ID. The response, a result of the execution of the service, is sent back to the client personal computer through the proxy server.

The responses to these series of service demands (requests) are managed by the terminal ID and the cookie (session control identifier). When a communication session continues, the relation of the terminal ID and the cookie is uniquely and statically maintained. That is, the proxy server (second computer system) of the present invention has a correspondence table of terminal Ids and cookies, and has a function of uniquely and statically relates them to bridge the communication process between the client and the proxy server and the communication process between the proxy server and the service site. Here, "uniquely" means one-to-one correspondence, and "statically" means that no change is made halfway.

Such system or method allows the access from a conventional personal computer to a service site for mobile terminals. By this, the performance of a service site can be verified using a general-purpose tool, and the construction, verification, and test of the service site can also be automatized. Further, the access from a conventional personal computer system is allowed not only during the test, but also during the normal use (service providing), and the user can seamlessly select the access from a mobile phone terminal or the access from a personal computer system using an ordinary browser. By selecting a mode of usage, the user can enjoy the service by a service site for mobile terminals, which are taking advantage of the real time characteristic, mobility, and usability. Further, the operator of a service site can seamlessly provide the service for personal computer systems without changing the system.

Further, in accordance with the system or method of the present invention, the cookie from a personal computer is obtained in response to the access from the personal computer system (third computer system), and it is determined whether the cookie was issued by the proxy server (second computer system). If the determination is "false," the connection is determined to be the first one, and a session is generated. The generation of a session is performed by selecting one terminal ID (third terminal identifier) from a previously generated terminal ID space, generating a cookie containing the selected terminal ID, and relating the terminal ID and the cookie to store them. And, thereafter the session is controlled by referring to the correspondence between the terminal ID and the cookie (hash table). Since the generated cookie is stored in the computer system of the client, the above determination becomes "true" in the successive connections. The terminal ID can also be stored in the cookie. The terminal ID in the cookie can be cut out and appended to the request, and the request with the terminal ID can be sent to the service site. To the request, the cookie can be further appended in addition to the terminal ID.

### Brief Description of the Drawings:

Figure 1 is a conceptual view showing an example of the computer network system that is an embodiment of the present invention;
Figure 2 is a block diagram showing the relation among the personal computer, proxy server (simulation server), and i-mode Web server;
Figure 3 is a flowchart for explaining an example of the method for communication between computer systems that is an embodiment of the present invention;
Figure 4 is a flowchart showing an example of the initialization of the proxy server;
Figure 5 is a flowchart showing an example of the method for measuring computer system performance that is another embodiment of the present invention; and
Figure 6 is a conceptual view showing another example of the computer network system that is an embodiment of the present invention.

### Preferred Embodiment

Now, the embodiments of the present invention are described in detail with respect to the accompanying drawings. However, the present invention can be practiced in many different forms, and it should not be limited to the contents described in the embodiments. The same numbers are assigned to the same elements throughout the embodiments.

Although, in the following embodiments, description is made mainly to a method or system, the present invention can be practiced not only as a method or system, but also as a medium having recorded thereon a program which can be used in a computer. Accordingly, the present invention can take a form as hardware, a form as software, or a form of combination of software and hardware. As the medium on which a program is recorded, any computer-readable medium including a hard disk, CD-ROM, optical storage device, or magnetic storage device can be given by way of example.

### Embodiment 1

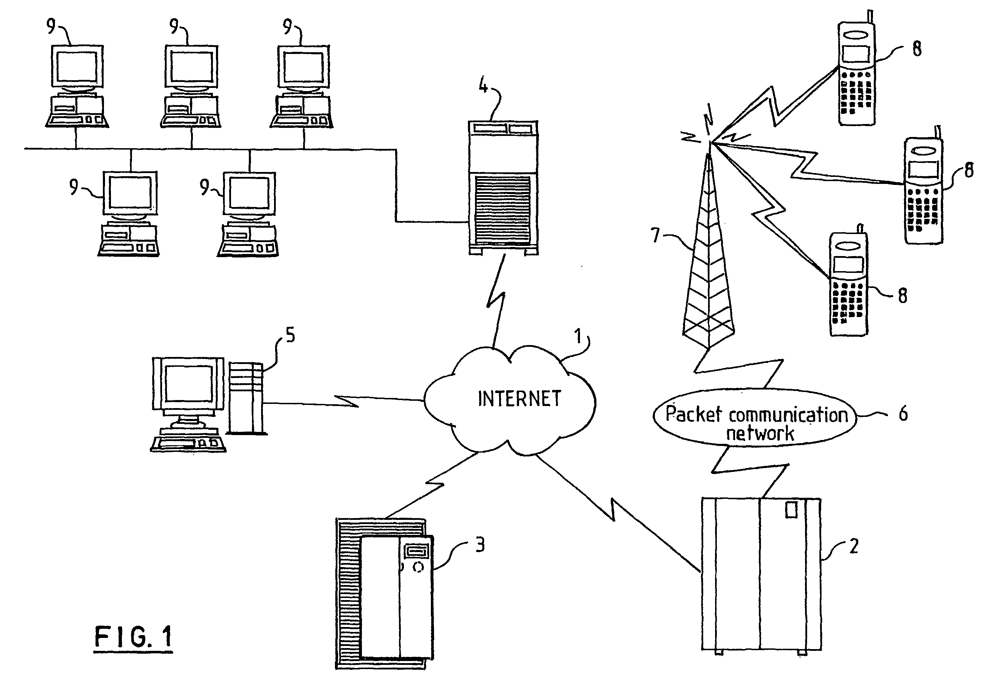

Figure 1 is a concept view showing an example of the computer network system that is an embodiment of the present invention. In the following embodiment, the "i-mode service" provided by NTT Docomo is given by way of example as an Internet service provided by a carrier such as a mobile telephone company, but this is no restriction. For instance, the present invention may apply to a service such as "J-sky" provided by the J-phone group or "EZ web" provided by the DDI group. Further, it is to be understood that the present invention may apply to similar services expected to be provided in the future. In addition, it is needless to say that the invention of this application can be provided not only to mobile phone terminals but also to services provided using unique terminal ID. An example is described below, in which the present invention is applied to the i-mode service provided by NTT Docomo.

The computer network system of this embodiment includes the Internet 1, a gateway (i-mode center) 2 connected to the Internet 1, a Web server 3, a proxy server 4, and a personal computer (PC) 5. To the gateway 2 of the carrier, i-mode terminals 8 are connected through a packet communication network 6 and a radio base station 7. Further, to the proxy server 4, personal computers 9 are connected through a LAN (Local Area Network).

The Internet 1 is a network which applies each of TCP (Transmission Control Protocol) or UDP (User Datagram Protocol) and IP (Internet Protocol) to the transport layer or the network layer to carry out communication between computer systems. Each equipment connected is identified by a URL (Uniform Resource Locator) or IP address. The Internet 1 also includes the so-called intranet the use of which is limited to a specific user. The connection to the Internet 1 is made by obtaining an IP address, or it may be made through an ISP (Internet Service Provider), for instance, by using PPP (Point to Point Protocol). The physical connection is made wirelessly, or by using a wire leased line or public circuit.

The gateway 2, packet communication network 6, and radio base station 7 are managed and operated by a carrier (telephone company). The radio base station 7 relays received radio waves sent from an i-mode terminal 8, and connects the i-mode terminal 8 to the packet communication network 6. The packet communication network 6 controls the voice communication and data communication between i-mode terminals 8, and also controls the communication from the i-mode terminal 8 to the Internet 1. Further, the packet communication network 6 manages and controls communication to a communication networks managed by other telephone companies. Although mobile phone terminals which do not support the i-mode are also certainly connected to the packet communication network 6, the description of it is omitted here.

The gateway 2 is a computer system which connects the packet communication network 6 and the Internet 1 to each other. The gateway 2 has a function which mutually converts the protocols (PDC-P, TLP, ALP) used in the packet communication network 6 and a protocol (IP, TCP, or UDP, HTTP) used in the Internet 1 for each layer such as the transport layer. Further, the gateway 2 issues a unique terminal ID to the i-mode terminal 8 for managing billing information. As the terminal ID, the telephone number of the i-mode terminal 8 can be applied, but it is not desirable that telephone number information specific to the terminal circulates in the Internet 1, which is an open communication environment. Accordingly, the carrier generates a terminal ID unique to the telephone number to identify the i-mode terminal 8. The correspondence table of the terminal ID and the telephone number is managed by the carrier, and by converting or encrypting the correspondence as needed, information enabling the terminal to be identified can be fed onto the Internet 1 without disclosing the telephone number.

The i-mode terminal 8 is a telephone or data communication terminal. Description is concentrated here on the data communication function, particularly the service for providing Web contents on the Internet. The i-mode terminal 8 is identified by a telephone number, but it is identified by a terminal ID on the Internet 1 as described above. The browser installed on the i-mode terminal 8 has a function of displaying compact HTML. Accordingly, on a website for i-mode terminals, contents are created based on compact HTML, as described later.

A service request from the i-mode terminal 8 is transferred as an ALP request on the packet communication network 6, and as a HTTP request converted by the gateway 2 on the Internet 1, and sent to the i-mode Web server 3 on the Internet 1. In the HTTP request, the URL of the i-mode Web server is specified, and the request is sent to the server specified by the URL.

To the request from the i-mode terminal 8, a terminal ID given by the gateway 2 is appended. The existence of such terminal ID allows the i-mode Web server 3 to identify the user, perform a billing, and customize services according to the user. For instance, if there is registration data of the like of user information that has already connected to the Web server 3, it can provide service taking into account the user convenience, such as providing service without requiring user information to be input again. Accordingly, in the i-mode Web server 3, the contents or system is usually constructed on the assumption that the terminal ID exists. However, the terminal ID is not essential for providing service. Service can be provided even if the existence of terminal ID is not assumed, and the present invention is not applied to a Web server that is not based on such terminal ID. But, if the terminal ID is used in part of service, the present invention is applied.

The i-mode website 3 is a contents service system intended for the access from the i-mode terminal 8 as described above. The contents are created for i-mode terminals in compliance with compact HTML. The i-mode Web server 3 sends back the contents according to a request from the i-mode terminal 8. However, if the existence of terminal ID is assumed as described above, it does not respond or can only partially respond when it receives a request containing no terminal ID. All the services are provided by obtaining the terminal ID. Since the terminal ID is given and managed by the carrier, the terminal ID is generally sent back only to a website approved by the carrier. However, if the present invention is applied, such characteristic of the terminal ID is not necessary. In addition the terminal ID is formed of numerals or characters of 12 digits, for instance, "AAABBBCCCDDD."

The content, which is a response to the request, is sent to the i-mode terminal 8 through the Internet 1, gateway 2, and packet communication network 6. The i-mode terminal 8 displays the content by the installed browser to make it available for use by the user.

The use of the i-mode Web server 3 from the i-mode terminal 8 can be realized as described above. Now, description is made to the use of the service by the i-mode Web server 3 from the personal computers 5 and 9. The personal computer is given here by way of example as the sender of a service request, but this is no limitation. As a matter of course, the sender may be other information processing equipment such as a PDA (Personal Digital Assistants) having no terminal ID, mainframe computer, or workstation.

The personal computers 5 and 9 are computer systems, which access the i-mode Web server 3 by using a common browser (for instance, Internet Explorer (trademark)) running on the systems, as described later. The personal computer 5 is identified, for instance, by an IP address and connected to the Internet 1. Alternatively, the personal computer 5 may be connected to the Internet 1 through an ISP (Internet Service Provider). On the other hand, a plurality of personal computers 9 is connected on a LAN, and connected to the Internet 1 via the proxy server 4.

The proxy server 4 has not only the common proxy server function, but also a simulation function of relating the generation of terminal ID and the cookie of the personal computer 5 or 9, which is a characteristic feature of the present invention.

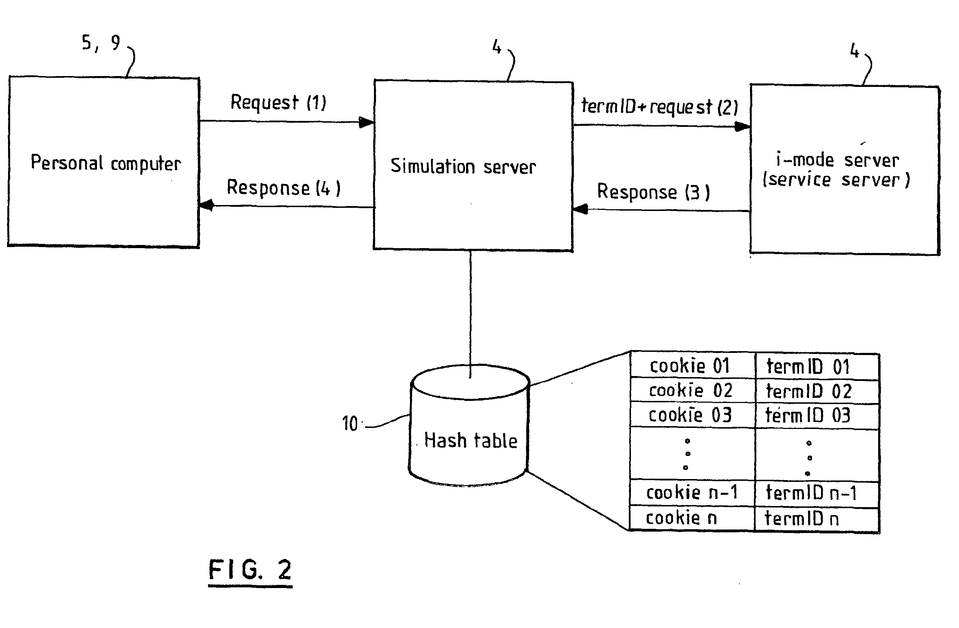

Figure 2 is a block diagram showing the relation among the personal computer 9, proxy server (simulation server) 4, and i-mode Web server 3. The personal computer 9 issues a request (1), which is received by the simulation server 4. Upon receipt of the request, the simulation server 4 generates or selects a terminal ID (termID). And, the simulation server 4 sends a request (2) with a terminal ID to the i-mode server 3. In the i-mode server 3, a processing according to the request is carried out. A terminal ID is appended to the request, and thus, for the i-mode server 3, it is not different from a request from the i-mode terminal 8, the whole service is provided as for the request from the i-mode terminal 8. That is, the request from the personal computer through the proxy server 4 is simulated as if it is a request from the i-mode terminal B. The result of service is sent back to the simulation server 4 as a response (3), which the simulation server 4 transfers to the personal computer 9, the sender of the request.

The generation or selection of a terminal ID is performed by referring to a hash table 10 provided in the simulation server 4. The hash table 10 can be physically stored, for instance, in the memory area of the simulation server 4 or in the external storage area such as a hard disk drive, it need not be stored in the same computer system as the simulation server 4, provided that its existence position can be identified by an identifying means such as URL or IP address.

In the hash table 10, the cookie and the terminal ID are stored so that they are related to each other. The cookie is generated for each personal computer 5 or 9, or each session in the personal computer 5 or 9 which issued the request, and uniquely related to the personal computer 5 or 9 or the session. On the other hand, the terminal ID is uniquely related to the cookie by the hash table 10, and as a result, the personal computer 5 or 9 or its session is uniquely related to the terminal ID. That is, for the communication between the personal computer 5 or 9 and the i-mode server 3 through the simulation server 4, the cookie can be used as an identifier for controlling the session. This allows the access from a personal computer having no terminal ID to the i-mode server 3, thereby to receive the service for the i mode. Further, since the full access from a personal computer to the i-mode server is allowed, it is possible to perform any test such as a bulk stress test by using a general-purpose test tool running on the personal computer.

In the above system, conventional computer systems can be used as the gateway 2, servers 3 and 4, and personal computers 5 and 9. For instance, a computer system can be used, which has a central processing unit (CPU), a main memory (RAM), and a nonvolatile memory (ROM) which are connected to each other by a bus. To the bus, a coprocessor, image accelerator, cache memory, input/output control device (I/O), and other devices may be connected. To the bus, an external storage device, data input device, display device, communication controller, and other devices are connected through an appropriate interface. Further, it is needless to say that hardware resources provided in a conventional computer system can be provided. A hard disk drive can be representatively given as the external storage device by way of example, but this is no limitation, and semiconductor memories such as magneto optical memory, optical memory, flash memory are also included. As the data input device, an input device such as a keyboard and a pointing device such as mouse can be provided. The data input device also includes an image reader such as a scanner, and a voice input unit. As the display device, a CRT, liquid crystal display, and plasma display can be given by way of example. Further, the computer system includes various kinds of computers such as a personal computer, workstation, and mainframe computer.

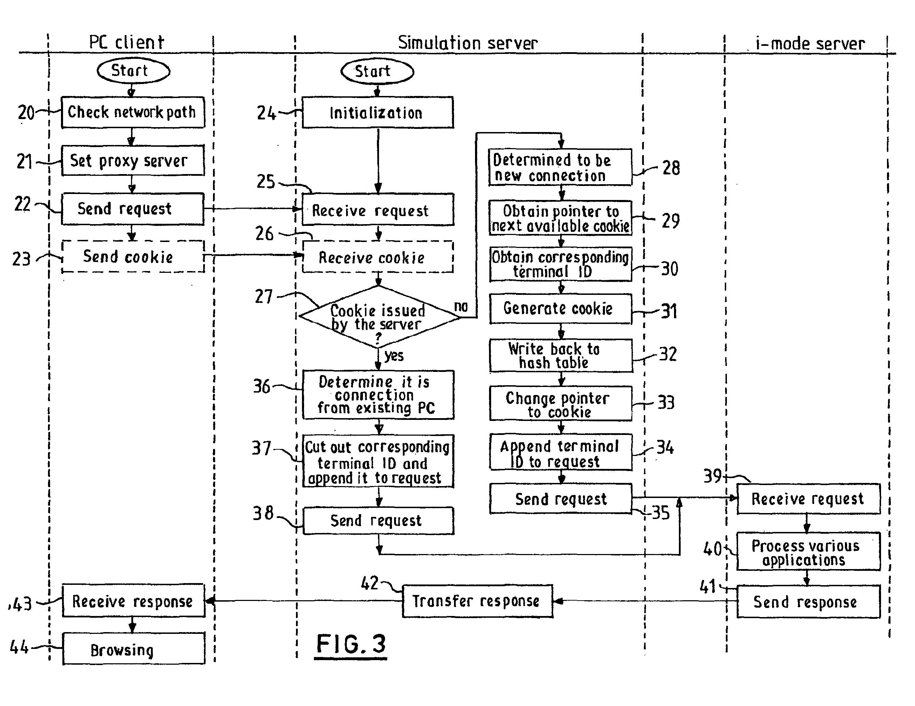

The communication method using the above described system is described below. Figure 3 is a flowchart explaining an example of the method for communication between computer systems, which is an embodiment of the present invention. In Figure 3, the processing in the personal computer 5 or 9 (PC client) is shown in the left part, the processing in the proxy server 4 (simulation server) is shown in the central part, and the processing in the i-mode Web server 3 (i-mode server) is shown in the right part.

First, by the beginning of the processing, the checking of the network path (step 20) and the setting of the proxy server (step 21) are carried out on the PC client side. As the proxy server, the proxy server 4 having the simulation function of the present invention is set. Thereafter, the PC client 5 or 9 issues a request (step 22), and if it has a cookie, the cookie is sent (step 23).

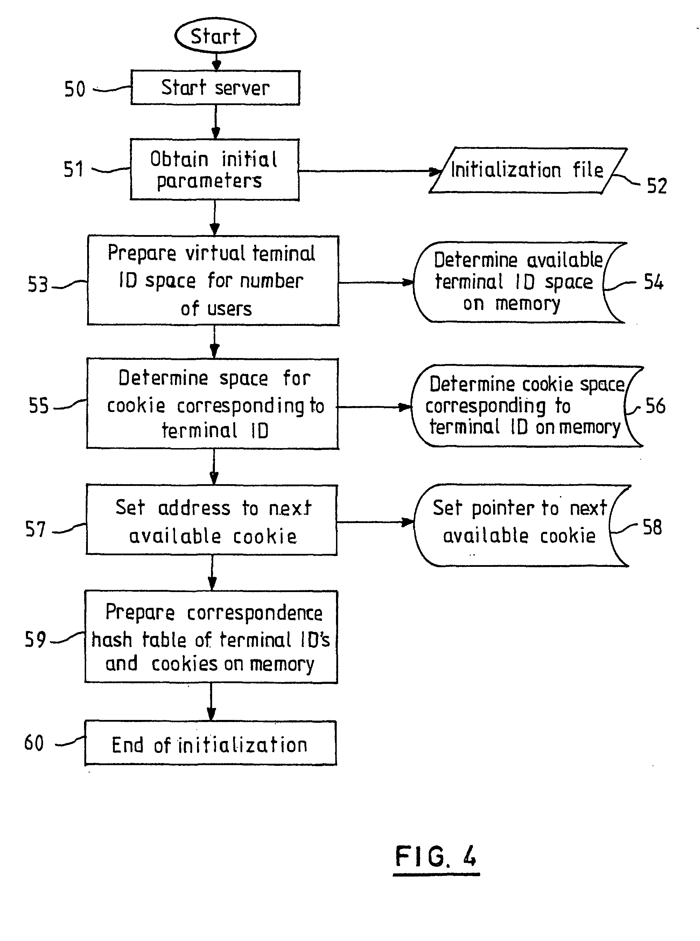

On the other hand, in the proxy server 4, initialization is performed by the beginning of the processing (step 24). Figure 4 is a flowchart showing an example of the initialization of the proxy server.

The server is started up by the beginning of the processing (step 50), and the initial parameters are obtained from a initialization file 52 which is stored in a predetermined storage area. The initial parameters are, for instance, the number of allowed users Users and the terminal ID space UsersFrom. The number of allowed users Users is the number of users which can be treated in the proxy server 4. The terminal ID space UsersFrom is a set of terminal ID's, and many terminal ID's exceeding the number of allowed users are generated and prepared for later use. It is needless to say that terminal ID's are generated so that they do not overlap. The previous generation of many terminal ID's eliminates the fear of generating overlapping terminal ID's during the operation of the server, and the terminal ID's previously given by the carrier can be avoided to prevent the overlapping with the terminal ID's when an access is made through the gateway 2 of the carrier. The terminal ID's generated here are generated in the form suitable for the format of the terminal ID's given in the gateway 2. For the i-mode, it is numerals or characters of 12 digits in the form of "AAABBBCCCDDD."

Then, a virtual ID space for the number of users is prepared (step 53). The virtual ID space is performed by recording (determining) an available terminal ID space in the memory of the server (step 54). For instance, if the number of users which can be simultaneously handled by the server is 1000, terminal ID's for 1000 users are extracted from the terminal ID space generated in step 51 as the initial parameter and recorded on the memory.

Then, the space of the corresponding cookie is determined for each terminal ID (step 55). The determined cookie space is kept on the memory of the server as a storage area (step 56).

Then, an available address for the cookie is set (step 57). The address setting is performed by storing the memory address of the cookie space kept in step 55 in a register functioning as a pointer (step 58).

Next, the area for a hash table showing the correspondences between terminal ID's and cookies is kept on the memory (step 59). In this way, the initialization process terminates (step 60).

When a request and a cookie are received by the proxy server 4 the initialization process of which terminated (steps 25 and 26), the proxy server 4 determines whether the cookie was issued by itself (step 27). Whether the cookie was issued by itself can be determined by whether the corresponding cookie is recorded in the hash table.

Since there is no cookie recorded just after the starting of the process, the determination in step 27 becomes "false (no)," and the process goes to step 28. In this case, in step 28, it is determined the connection from the sender PC of the current request is a new connection (step 28), and the pointer to the next available cookie is obtained (step 29). As to the pointer, a pointer area was kept on the memory in the above initialization process, and the pointer value can be obtained by obtaining a value stored in the memory. The pointer just after the starting of the process indicates the leading cookie space. The pointer value is the address of the memory area in which the cookie is stored, as described above, and terminal ID's are related to the cookie space (area) as described in the initialization process. However, the terminal ID's after the pointer have not been used yet.

Then, from the pointer value, the corresponding terminal ID is obtained (step 30). This terminal ID is used in the current request and the succeeding session.

Then, the server generates a cookie according to a predetermined generation rule (step 31). For instance, the terminal ID and access time can be included. Since access is not simultaneously made from the same computer system 5 or 9, an access record can be uniquely generated by storing both the access time and the terminal ID in the cookie.

Then, the generated cookie and terminal ID are written to a predetermined area of the hash table (step 32). This has uniquely related the cookie and the terminal ID. This correlation is kept while the session continues. The session is, for instance, from the starting to the termination of the browser. A plurality of request may occur in a single session, and in this case, the same terminal ID is used in the single session.

Then, the pointer to the next available cookie is incremented by one (step 33). This is to prepare for the generation of a terminal ID for the next new connection.

Then, the generated terminal ID is appended to the request (step 34), and the request with the terminal ID is sent to the i-mode server 3 (step 35). Further, the generated cookie may be sent to the personal computer 5 or 9, and stored in a predetermined memory area in each PC.

On the other hand, if the determination in step 27 is "true (yes)," it is determined to be a connection from an existing PC (step 36). In this case, a cookie must have already been generated, and a terminal ID is cut out from the cookie. And, the cut terminal ID is appended to the request (step 37). As to the cookie to be referred to, if a cookie was already sent to the personal computer from the proxy server 4, and sent to the server along with the current request, then this received cookie can be referred to. If no cookie is sent along with the request, the cookie stored in the hash table can be referred to.

And, the request with the terminal ID is sent to the i-mode server 3 (step 38). In the i-mode server 3, the request with the terminal ID is received (step 39), and after executing a predetermined application or service (step 40), a response is sent (step 41). In the i-mode server, the request with the terminal ID is received, so full service is provided as for a request from the i-mode terminal 8. That is, by using the method of this embodiment, all the service prepared in the i-mode server can be received even for a service request from the personal computer.

The response from the i-mode server 3 is transferred through the proxy server 4 (step 42), and received at the personal computer 5 or 9 (step 43). In the personal computer 5 or 9, the received response, for instance, contents described in compact HTML is browsed and displayed (step 44).

In this way, the response to a request is actualized in a personal computer. If a request is issued again in the same session (until the browser is closed), "yes" is determined in the above step 27, and using the terminal ID already given to the session, the request is sent to the i-mode Web site as described above. At the end of the session, the cookie stored in the personal computer is erased. If a request is issued in a new session, a new terminal ID is given. In the example described here, the cookie is erased at the end of the session, but the cookie may be reserved for a long period of time. In this case, since the same terminal ID is used before and after the session terminates, it is needed to store the identifier of the personal computer in the cookie. For instance, the IP address of the personal computer can be stored as the identifier.

As described above, by using the communication method of this embodiment, access to the i-mode Web server 3 is enabled from a personal computer having no terminal ID. This allows the user to access the same i-mode Web server from an i-mode terminal or a personal computer, so the user can enjoy the merits of both the real time characteristic and mobility of the mobile terminal and the usability of the personal computer. Further, the operator of an i-mode Web server can also provide the contents for i-mode to personal computer users without modifying the system. Furthermore, as described below, a personal computer can measure the performance of an i-mode Web server by the use of a general-purpose test tool. By using a general-purpose test tool, a proper bulk stress verification can be performed, and in addition, a performance check can be made, as needed, even in the course of developing a system, and the construction, verification, and test of the system can be automated to increase the system development efficiency.

### Embodiment 2

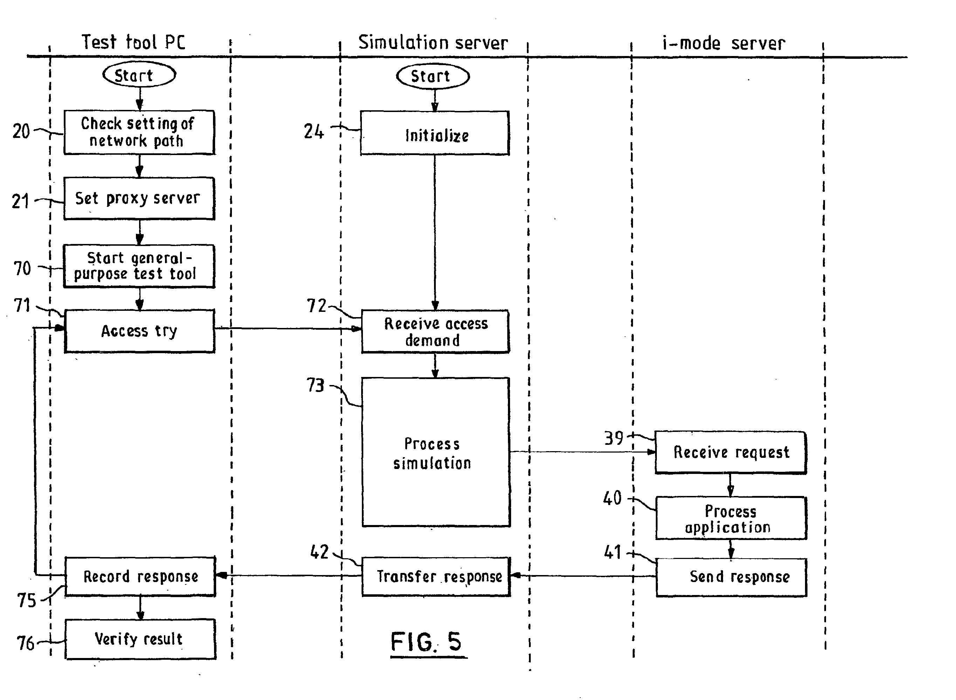

The following description is directed to one example in which a bulk stress test of an i-mode Web site is performed using the system described in the embodiment 1. Figure 5 is a flowchart showing an example of the method for measuring the performance of a computer system, which is another embodiment of the present invention. In Figure 5, the processing in the personal computer 5 or 9 (test tool PC) is shown in the left part, the processing in the proxy server 4 (simulation server) is shown in the central part, and the processing in the i-mode Web server 3 (i-mode server) is shown in the right part, as in Figure 3.

The checking of the network path in the test tool PC after beginning the process (step 20), the setting of the proxy server (step 21), and the execution of the initialization process in the simulation server (step 24) are similar to the Embodiment 1.

In the test tool PC (personal computer 5 , 9), a general-purpose test tool is started after step 21 (step 70). Thereafter, an access try is performed under the control of the test tool (step 71). The access demand (request) is sent to the simulation server 4, which receives it (step 72). Then, the simulation process described in the Embodiment 1, or generating a terminal ID and a cookie and relating them, is carried out (step 73). The terminal ID is appended to the request, which is sent to the i-mode server 3, as in the Embodiment 1, and the i-mode server 3 receives it (step 39). In the i-mode server 3, an application processing or service processing of the object to be tested is carried out (step 40), and a response is sent (step 41).

The sent response is transferred through the simulation server (step 42), and the receiving test tool PC records the response (step 75). And, the test tool repeats the predetermined access try, and thereafter it verifies the response result (step 76).

The series of processing is performed in parallel by the test tool installed on one PC. The number of sessions processed in parallel depends on the number of licenses of the test tool. That is, since the Internet and LAN are broadband communication means, the number of them can be increased to the extent that the simultaneous processing of many users (sessions) is bottlenecked by the communication speed. Further, if a plurality of personal computers is used to ensure a plurality of access paths, simulation can be performed on a condition where an enormous number of users simultaneously access the i-mode server 3. That is, the verification of response in such condition is a bulk stress test. In this embodiment, such bulk stress test can easily be made. In addition, since a general-purpose test tool is used, the test is automatized, and various performance measuring tools may also be used. As a result, the performance verification process for an i-mode server can be simplified, and the system development efficiency can be increased. Further, in the conventional verification in which access is made by actually using i-mode terminals, only one access can be realized by one mobile phone, so it was impossible to implement a considerable number of bulk stresses. In the verification method of this embodiment, a general-purpose test tool can be used, so a considerable number of bulk stresses can simply be simulated.

Although the invention made by the present inventor has been specifically described according to the embodiments of the invention, the present invention is not limited to the above embodiments, but it may be variously modified without departing from its gist.

For instance, NTT Docomo has been shown as the carrier and the i-mode terminal has been shown as the mobile phone terminal in the above embodiments by way of example, but this is no limitation. For instance, the present invention can also apply to J-sky of the J-phone group and EZweb of the DDI group.

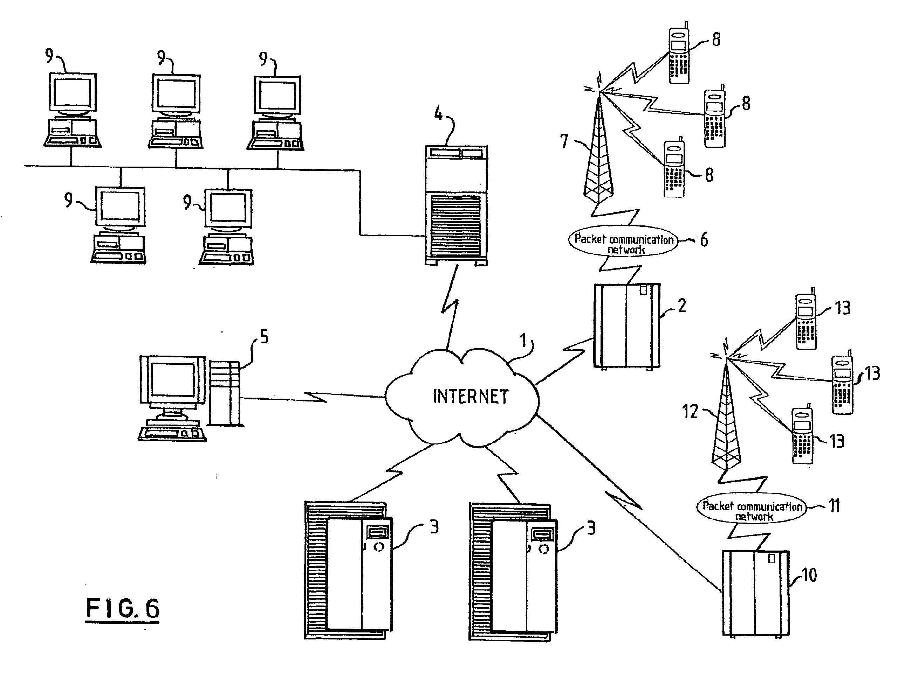

Further, as shown in Figure 6, a plurality of Internet services by mobile phone systems assigned terminal ID's may exist. In a first mobile phone system 2, 6, 7, 8 and a second mobile phone system 10, 11, 12, 13, the formats of terminal ID's used may be different from each other. For instance, one is 12 digits and the other is 13 digits. In such case, the simulation server 4 can determine for which mobile phone service the Web site is intended, and select a terminal ID format as needed.

Further, the mobile phone service has been shown by way of example as a service in which a request with a terminal ID is issued, but this is no limitation. It is needless to say that the present invention can apply to the simulation of a system in which service is provided by appending unique identifier information corresponding to terminal ID.

### Advantages of the Invention

Of the inventions disclosed in this application, the advantages obtained by the representative one are as follows. That is, connection can be made to a service site intended for mobile phone terminals from a conventional personal computer having no terminal ID. Further, an effective bulk stress test using a general-purpose Web performance tool can be performed for a service site intended for mobile phone terminals. Furthermore, service sites for mobile phone terminals and conventional personal computers can easily be constructed.

### Description of Symbols

- 1: Internet
- 2: gateway
- 3: i-mode Web server (website)
- 4: simulation server (proxy server)
- 5: personal computer (PC client)
- 6: packet communication network
- 7: radio base station
- 8: i-mode terminal
- 9: personal computer
- 10: hash table
- 52: initialization file

## Claims

1. A computer network system comprising:
terminals identified with an inherent terminal identifier, respectively, and generating a request;
a communication network for communicating voice, data, and other information among said terminals;
a gateway (2) for connecting said communication network to a computer network, and appending said inherent terminal identifier or a second terminal identifier related to said inherent terminal identifier to said request;
a first computer system (3) connected to said computer network, for referring to said inherent terminal identifier or said second terminal identifier to provide a service in response to said request;
a second computer system (4) connected to said computer network;
a third computer system (9) connected to said first computer system through said second computer system,
wherein said second computer system including:
a unit for generating a third terminal identifier suitable for the format of said inherent terminal identifier or said second terminal identifier;
a unit for generating a session control identifier related to said third computer system;
a unit for relating said third terminal identifier to said session control identifier; and
a unit responsive to a request from said third computer system for appending said third terminal identifier to said request, and sending said request to said first computer system.

2. The computer network system according to Claim 1,
wherein said terminals are mobile phones;
said third computer system (9) is a personal computer system; and
said session control identifier is information recorded in the cookie of said third computer system.

3. The computer network system according to Claim 1 or 2,
wherein said third terminal identifier and said session control identifier are uniquely and statically related during a communication session between said first computer system and said third computer system.

4. A computer system (4) enabled to access a first computer system (3) which is capable of receiving a request accompanied by an inherent terminal identifier or a second terminal identifier related to said inherent terminal identifier, and referring to said inherent terminal identifier or said second terminal identifier to respond to said request, said computer system comprising:
a unit for generating a third terminal identifier suitable for the format of said inherent terminal identifier or said second terminal identifier;
**characterized by**:
a unit for generating a session control identifier related to a third computer system having no said inherent terminal identifier;
a unit for relating said third terminal identifier and said session control identifier; and
a unit responsive to a request from said third computer system for appending said third terminal identifier to said request, and sending said request to said first computer system.

5. The computer system according to Claim 4,
wherein said third computer system is a personal computer system, and said session control identifier is information recorded in the cookie of said third computer system.

6. The computer system according to Claim 5, further comprising:
a unit responsive to an access from said third computer system for obtaining the information in the cookie from said third computer system, and determining whether said cookie has been issued by said computer system;
a unit for selecting one of said third terminal identifiers previously generated if said determination is "false," and generating a cookie including said selected third terminal identifier;
a unit for relating said selected third terminal identifier and said cookie, and storing them; and
a unit for appending said third terminal identifier and optionally said cookie to said request, and sending said request to said first computer system.

7. The computer system according to Claim 6, comprising:
a unit for referring to the information on the cookie to obtain said third terminal identifier contained in said cookie, if said determination is "true"; and
a unit for appending said third terminal identifier to said request, and sending said request to said first computer system.

8. The computer system according to any of Claims 4-7, wherein said third terminal identifier and said session control identifier are uniquely and statically related during the communication session between said first computer system and third computer system.

9. A method for communication between a first computer system (3) and a third computer system (9) connected to said first computer system (3) through a second computer system (4) said first computer system (3) being capable of receiving a request accompanied by an inherent terminal identifier or a second terminal identifier related to said inherent terminal identifier, and referring to said inherent terminal identifier or said second terminal identifier to respond to said request, said method comprising the steps of:
generating a third terminal identifier suitable for the format of said inherent terminal identifier or said second terminal identifier;
**characterized by**
generating a session control identifier related to said third computer system (9) having no said inherent terminal identifier;
relating said third terminal identifier and said session control identifier; and
responding to a request from said third computer system (9) for appending said third terminal identifier to said request, and sending said request to said first computer system.

10. A method for measuring the performance of a first computer system (3) capable of receiving a request accompanied by an inherent terminal identifier or a second terminal identifier related to said inherent terminal identifier, and referring to said inherent terminal identifier or said second terminal identifier to respond to said request, in which a general-purpose Web test tool is installed in a third computer system (9) connected to said first computer system (3) through a second computer system (4), said method comprising the steps of:
generating a third terminal identifier suitable for the format of said inherent terminal identifier or said second terminal identifier;
**characterized by**
generating a related session control identifier for each user of said Web test tool;
relating said third terminal identifier and said session control identifier; and
responding to a request from each user for appending said third terminal identifier to said request, and sending said request to said first computer system.

11. A storage medium on which a computer-readable program is stored for enabling a computer to implement communication between a first computer system and a third computer system connected to said first computer system through a second computer system, said first computer system being capable of receiving a request accompanied by an inherent terminal identifier or a second terminal identifier related to said inherent terminal identifier, and referring to said inherent terminal identifier or said second terminal identifier to respond to said request,
a storage medium having stored thereon a program for enabling a computer to implement the functions of:
generating a third terminal identifier suitable for the format of said inherent terminal identifier or said second terminal identifier;
generating a session control identifier related to the third computer system having no said inherent terminal identifier;
relating said third terminal identifier and said session control identifier; and
responding to a request from said third computer system for appending said third terminal identifier to said request, and sending said request to said first computer system.

## Patentansprüche

1. Computernetzsystem, das Folgendes umfasst:
Endgeräte, die jeweils mit einem zugehörigen Endgerätekennzeichner **gekennzeichnet** sind und eine Anforderung erzeugen;
ein Nachrichtennetz zur Übertragung von Sprache, Daten und anderen Informationen zwischen den Endgeräten;
einen Gateway (2) zum Verbinden des Nachrichtennetzes mit einem Computernetz und zum Anhängen des zugehörigen Endgerätekennzeichners oder eines zweiten mit dem zugehörigen Endgerätekennzeichner zusammenhängenden Endgerätekennzeichners an die Anforderung;
ein mit dem Computernetz verbundenes erstes Computersystem (3), um auf den zugehörigen Endgerätekennzeichner oder den zweiten Endgerätekennzeichner Bezug zu nehmen, um auf die Anforderung hin einen Dienst bereitzustellen;
ein mit dem Computernetz verbundenes zweites Computersystem (4);
ein drittes Computersystem (9), das durch das zweite Computersystem mit dem ersten Computersystem verbunden ist,
wobei das zweite Computersystem Folgendes enthält:
eine Einheit zum Erzeugen eines dritten Endgerätekennzeichners, der für das Format des zugehörigen Endgerätekennzeichners oder des zweiten Endgerätekennzeichners geeignet ist;
eine Einheit zum Erzeugen eines mit dem dritten Computersystem zusammenhängenden Sitzungssteuerungskennzeichners;
eine Einheit, um den dritten Endgerätekennzeichner mit dem Sitzungssteuerungskennzeichner zu verbinden; und
eine Einheit, die auf eine Anforderung vom dritten Computersystem anspricht, um den dritten Endgerätekennzeichner an die Anforderung anzuhängen und die Anforderung an das erste Computersystem zu übertragen.

2. Computernetzsystem nach Anspruch 1,
wobei die Endgeräte Mobiltelefone sind;
wobei das dritte Computersystem (9) ein Personal-Computer-System ist; und
wobei der Sitzungssteuerungskennzeichner aus Daten besteht, die im Cookie des dritten Computersystems aufgezeichnet werden.

3. Computernetzsystem nach Anspruch 1 oder 2,
wobei der dritte Endgerätekennzeichner und der Sitzungssteuerungskennzeichner einmalig und während einer Datenaustauschsitzung zwischen dem ersten Computersystem und dem dritten Computersystem statisch verbunden sind.

4. Computersystem (4) mit der Fähigkeit zum Zugriff auf ein erstes Computersystem (3), das eine Anforderung empfangen kann, die von einem zugehörigen Endgerätekennzeichner oder einem zweiten mit dem zugehörigen Endgerätekennzeichner zusammenhängenden Endgerätekennzeichner begleitet wird, und das auf den zugehörigen Endgerätekennzeichner oder den zweiten Endgerätekennzeichner Bezug nimmt, um auf die Anforderung zu antworten, wobei das Computersystem Folgendes umfasst:
eine Einheit zum Erzeugen eines dritten Endgerätekennzeichners, der für das Format des zugehörigen Endgerätekennzeichners oder des zweiten Endgerätekennzeichners geeignet ist;
**gekennzeichnet durch**:
eine Einheit zum Erzeugen eines Sitzungssteuerungskennzeichners, der mit einem dritten Computersystem zusammenhängt, das keinen zugehörigen Endgerätekennzeichner aufweist;
eine Einheit zum Verbinden des dritten Endgerätekennzeichners und des Sitzungssteuerungskennzeichners; und
eine Einheit, die auf eine Anforderung vom dritten Computersystem anspricht, um den dritten Endgerätekennzeichner an die Anforderung anzuhängen und die Anforderung an das erste Computersystem zu übertragen.

5. Computersystem nach Anspruch 4,
wobei das dritte Computersystem ein Personal-Computer-System ist und der Sitzungssteuerungskennzeichner aus Daten besteht, die im Cookie des dritten Computersystems aufgezeichnet werden.

6. Computersystem nach Anspruch 5, das außerdem Folgendes umfasst:
eine auf einen Zugriff vom dritten Computersystem ansprechende Einheit zum Erhalten der Daten im Cookie des dritten Computersystems und zum Feststellen, ob das Cookie vom Computersystem ausgegeben wurde;
eine Einheit zum Auswählen von einem der zuvor erzeugten dritten Endgerätekennzeichner, falls die Feststellung "falsch" ist, und zum Erzeugen eines Cookie, das den ausgewählten dritten Endgerätekennzeichner enthält;
eine Einheit zum Verbinden des ausgewählten dritten Endgerätekennzeichners und des Cookie und zum Speichern derselben; und
eine Einheit zum Anhängen des dritten Endgerätekennzeichners und wahlweise des Cookie an die Anforderung und zum Übertragen der Anforderung an das erste Computersystem.

7. Computersystem nach Anspruch 6, das Folgendes umfasst:
eine Einheit zur Bezugnahme auf die Daten im Cookie, um den im Cookie enthaltenen dritten Endgerätekennzeichner zu erhalten, falls die Feststellung "wahr" ist; und
eine Einheiten zum Anhängen des dritten Endgerätekennzeichners an die Anforderung und zum Übertragen der Anforderung an das erste Computersystem.

8. Computersystem nach irgendeinem der Ansprüche 4 bis 7,
wobei der dritte Endgerätekennzeichner und der Sitzungssteuerungskennzeichner einmalig und während der Datenaustauschsitzung zwischen dem ersten Computersystem und dem dritten Computersystem und statisch verbunden sind.

9. Verfahren zum Datenaustausch zwischen einem ersten Computersystem (3) und einem dritten Computersystem (9), das durch ein zweites Computersystem (4) mit dem ersten Computersystem (3) verbunden ist, wobei das erste Computersystem (3) eine Anforderung empfangen kann, die von einem zugehörigen Endgerätekennzeichner oder einem zweiten mit dem zugehörigen Endgerätekennzeichner zusammenhängenden Endgerätekennzeichner begleitet wird, und auf den zugehörigen Endgerätekennzeichner oder auf den zweiten Endgerätekennzeichner Bezug nehmen kann, um auf die Anforderung zu antworten, wobei das Verfahren die folgenden Schritte umfasst:
Erzeugen eines dritten Endgerätekennzeichners, der für das Format des zugehörigen Endgerätekennzeichners oder des zweiten Endgerätekennzeichners geeignet ist;
**gekennzeichnet durch**
Erzeugen eines Sitzungssteuerungskennzeichners, der mit dem dritten Computersystem (9) in Zusammenhang steht, das keinen zugehörigen Endgerätekennzeichner aufweist;
Verbinden des dritten Endgerätekennzeichners und des Sitzungssteuerungskennzeichners; und
Antworten auf eine Anforderung vom dritten Computersystem (9), um den dritten Endgerätekennzeichner an die Anforderung anzuhängen und die Anforderung an das erste Computersystem zu übertragen.

10. Verfahren zum Messen der Leistungsfähigkeit eines ersten Computersystems (3), das eine Anforderung empfangen kann, die von einem zugehörigen Endgerätekennzeichner oder einem zweiten mit dem zugehörigen Endgerätekennzeichner zusammenhängenden Endgerätekennzeichner begleitet wird, und auf den zugehörigen Endgerätekennzeichner oder auf den zweiten Endgerätekennzeichner Bezug nehmen kann, um auf die Anforderung zu antworten, wobei ein Universalhilfsprogramm zur Web-Prüfung in einem dritten Computersystem (9) installiert ist, das durch ein zweites Computersystem (4) mit dem ersten Computersystem (3) verbunden ist, wobei das Verfahren die folgenden Schritte umfasst:
Erzeugen eines dritten Endgerätekennzeichners, der für das Format des zugehörigen Endgerätekennzeichners oder des zweiten Endgerätekennzeichners geeignet ist;
**gekennzeichnet durch**
Erzeugen eines verbundenen Sitzungssteuerungskennzeichners für jeden Benutzer des Web-Prüfhilfsprogramms;
Verbinden des dritten Endgerätekennzeichners und des Sitzungssteuerungskennzeichners; und
Antworten auf eine Anforderung von jedem Benutzer, um den dritten Endgerätekennzeichner an die Anforderung anzuhängen und die Anforderung an das erste Computersystem zu übertragen.

11. Speichermedium, in dem ein computerlesbares Programm gespeichert ist, um einem Computer die Ausführung eines Datenaustauschs zwischen einem ersten Computersystem und einem dritten Computersystem zu ermöglichen, das durch ein zweites Computersystem mit dem ersten Computersystem verbunden ist, wobei das erste Computersystem eine Anforderung empfangen kann, die von einem zugehörigen Endgerätekennzeichner oder einem zweiten mit dem zugehörigen Endgerätekennzeichner zusammenhängenden Endgerätekennzeichner begleitet wird, und auf den zugehörigen Endgerätekennzeichner oder auf den zweiten Endgerätekennzeichner Bezug nehmen kann, um auf die Anforderung zu antworten,
ein Speichermedium, auf dem ein Programm gespeichert ist, um einem Computer die Ausführung der folgenden Funktionen zu ermöglichen:
Erzeugen eines dritten Endgerätekennzeichners, der für das Format des zugehörigen Endgerätekennzeichners oder des zweiten Endgerätekennzeichners geeignet ist;
Erzeugen eines Sitzungssteuerungskennzeichners, der mit dem dritten Computersystem zusammenhängt, das keinen zugehörigen Endgerätekennzeichner aufweist;
Verbinden des dritten Endgerätekennzeichners und des Sitzungssteuerungskennzeichners; und
Antworten auf eine Anforderung vom dritten Computersystem, um den dritten Endgerätekennzeichner an die Anforderung anzuhängen und die Anforderung an das erste Computersystem zu übertragen.

## Revendications

1. Système de réseau informatique comprenant :
des terminaux identifiés par un identificateur propre au terminal, respectivement, et générant une demande,
un réseau de communications destiné à communiquer de la voix, des données et autres informations entre lesdits terminaux,
une passerelle (2) destinée à connecter ledit réseau de communications à un réseau informatique, et ajouter ledit identificateur propre au terminal ou bien un second identificateur de terminal associé audit identificateur propre au terminal à ladite demande,
un premier système informatique (3) relié audit réseau informatique, destiné à faire référence audit identificateur propre au terminal ou audit second identificateur propre au terminal pour fournir un service en réponse à ladite demande,
un second système informatique (4) relié audit réseau informatique,
un troisième système informatique (9) relié audit premier système informatique par l'intermédiaire dudit second système informatique,
dans lequel ledit second système informatique comprend :
une unité destinée à générer un troisième identificateur de terminal convenant pour le format dudit identificateur propre au terminal ou dudit second identificateur de terminal,
une unité destinée à générer un identificateur de commande de session associé audit troisième système informatique,
une unité destinée à relier ledit troisième identificateur de terminal audit identificateur de commande de session, et
une unité répondant à une demande provenant dudit troisième système informatique pour ajouter ledit troisième identificateur de terminal à ladite demande, et envoyer ladite demande audit premier système informatique.

2. Système de réseau informatique selon la revendication 1,
dans lequel lesdits terminaux sont des téléphones mobiles,
ledit troisième système informatique (9) est un système d'ordinateur personnel, et
ledit identificateur de commande de session représente des informations enregistrées dans le programme mouchard (cookie) dudit troisième système informatique.

3. Système de réseau informatique selon la revendication 1 ou 2,
dans lequel ledit troisième identificateur de terminal et ledit identificateur de commande de session sont associés de façon unique et statique pendant une session de communication entre ledit premier système informatique et ledit troisième système informatique.

4. Système informatique (4) activé pour accéder à un premier système informatique (3) qui est capable de recevoir une demande accompagnée d'un identificateur propre au terminal ou d'un second identificateur de terminal associé audit identificateur propre au terminal, et se référant audit identificateur propre au terminal ou audit second identificateur de terminal pour répondre à ladite demande, ledit système informatique comprenant :
une unité destinée à générer un troisième identificateur de terminal convenant pour le format dudit identificateur propre au terminal ou dudit second identificateur de terminal,
**caractérisé par** :
une unité destinée à générer un identificateur de commande de session associé à un troisième système informatique n'ayant pas ledit identificateur propre au terminal,
une unité destinée à associer ledit troisième identificateur de terminal et ledit identificateur de commande de session, et
une unité répondant à une demande provenant dudit troisième système informatique pour ajouter ledit troisième identificateur de terminal à ladite demande, et envoyer ladite demande audit premier système informatique.

5. Système informatique selon la revendication 4,
dans lequel ledit troisième système informatique est un système d'ordinateur personnel, et ledit identificateur de commande de session représente des informations enregistrées dans le programme mouchard dudit troisième système informatique.

6. Système informatique selon la revendication 5, comprenant en outre :
une unité répondant à un accès depuis ledit troisième système informatique pour obtenir les informations dans le programme mouchard à partir dudit troisième système informatique, et déterminer si ledit programme mouchard a été émis par ledit système informatique,
une unité destinée à sélectionner l'un desdits troisièmes identificateurs de terminaux précédemment générés si ladite détermination est "fausse", et générer un programme mouchard comprenant ledit troisième identificateur de terminal sélectionné,
une unité destinée à associer ledit troisième identificateur de terminal sélectionné et ledit programme mouchard, et les mémoriser, et
une unité destinée à ajouter ledit troisième identificateur de terminal et optionnellement ledit programme mouchard à ladite demande, et à envoyer ladite demande audit premier système informatique.

7. Système informatique selon la revendication 6, comprenant :
une unité destinée à faire référence aux informations sur le programme mouchard pour obtenir ledit troisième identificateur de terminal contenu dans ledit programme mouchard, si ladite détermination est "vraie", et
une unité destinée à ajouter ledit troisième identificateur de terminal à ladite demande, et envoyer ladite demande audit premier système informatique.

8. Système informatique selon l'une quelconque des revendications 4 à 7, dans lequel ledit troisième identificateur de terminal et ledit identificateur de commande de session sont associés de façon unique et statique pendant la session de communication entre ledit premier système informatique et le troisième système informatique.

9. Procédé de communication entre un premier système informatique (3) et un troisième système informatique (9) relié audit premier système informatique (3) par l'intermédiaire d'un second système informatique (4), ledit premier système informatique (3) pouvant recevoir une demande accompagnée d'un identificateur propre au terminal ou d'un second identificateur de terminal associé audit identificateur propre au terminal, et se référer audit identificateur propre au terminal ou audit second identificateur de terminal pour répondre à ladite demande, ledit procédé comprenant les étapes consistant à :
générer un troisième identificateur de terminal convenant pour le format dudit identificateur propre au terminal ou dudit second identificateur de terminal,
**caractérisé par**
la génération d'un identificateur de commande de session associé audit troisième système informatique (9) ne possédant pas ledit identificateur propre au terminal,
l'association dudit troisième identificateur de terminal et dudit identificateur de commande de session, et
la réponse à une demande provenant dudit troisième système informatique (9) pour ajouter ledit troisième identificateur de terminal à ladite demande, et l'envoi de ladite demande audit premier système informatique.

10. Procédé destiné à mesurer les performances d'un premier système informatique (3) pouvant recevoir une demande accompagnée d'un identificateur propre au terminal ou d'un second identificateur de terminal associé audit identificateur propre au terminal, et se référer audit identificateur propre au terminal ou audit second identificateur de terminal pour répondre à ladite demande, dans lequel un outil de test de réseau Web d'usage général est installé dans un troisième système informatique (9) relié audit premier système informatique (3) par l'intermédiaire d'un second système informatique (4), ledit procédé comprenant les étapes consistant à :
générer un troisième identificateur de terminal convenant pour le format dudit identificateur propre au terminal ou dudit second identificateur de terminal,
**caractérisé par**
la génération d'un identificateur de commande de session associé pour chaque utilisateur dudit outil de test de réseau Web,
l'association dudit troisième identificateur de terminal et dudit identificateur de commande de session, et
la réponse à une demande provenant de chaque utilisateur pour ajouter ledit troisième identificateur de terminal à ladite demande, et envoyer ladite demande audit premier système informatique.

11. Support de mémorisation sur lequel un programme lisible par un ordinateur est mémorisé pour permettre à un ordinateur de mettre en oeuvre une communication entre un premier système informatique et un troisième système informatique relié audit premier système informatique par l'intermédiaire d'un second système informatique, ledit premier système informatique pouvant recevoir une demande accompagnée d'un identificateur propre au terminal ou d'un second identificateur de terminal associé audit identificateur propre au terminal, et se référer audit identificateur propre au terminal ou audit second identificateur de terminal pour répondre à ladite demande,
support de mémorisation comportant, mémorisé sur celui-ci, un programme destiné à permettre à un ordinateur de mettre en oeuvre les fonctions consistant à :
générer un troisième identificateur de terminal convenant pour le format dudit identificateur propre au terminal ou dudit second identificateur de terminal,
générer un identificateur de commande de session associé au troisième système informatique n'ayant pas ledit identificateur propre au terminal,
associer ledit troisième identificateur de terminal et ledit identificateur de commande de session, et
répondre à une demande dudit troisième système informatique pour ajouter ledit troisième identificateur de terminal à ladite demande, et envoyer ladite demande audit premier système informatique.
